# EUROPÄISCHE PATENTANMELDUNG

(11) **EP 4 538 988 A1**
(43) Veröffentlichungstag der Anmeldung: **16.04.2025**
(21) Anmeldenummer: 23203461.1
(22) Anmeldetag: 13.10.2023
(51) Int. Cl.: G06V 10/56, G06V 20/56, G06V 30/19

(54) **VERFAHREN ZUR ECHTZEIT-DETEKTION VON FAHRBAHNMARKIERUNGEN**

(71) Anmelder: ZKW Group GmbH, 3250 Wieselburg (AT)
(72) Erfinder: Chistov, Oleksandr, 3250 Wieselburg (AT)
(74) Vertreter: Patentanwaltskanzlei Matschnig & Forsthuber OG

(57) **Zusammenfassung**

Verfahren zur Echtzeit-Detektion von Fahrbahnmarkierungen (2, 4) auf einer Fahrbahn (1), umfassend die folgenden Schritte: Aufnehmen eines Farbbildes einer Fahrzeugumgebung eines Kraftfahrzeuges, Transformieren des Farbbildes in ein Farbmodell mit zumindest drei Farbkanälen, Segmentieren eines Farbkanalbilds in einen Fahrbahnbildausschnitt und einen Umgebungsbildausschnitt, Überlagern des Fahrbahnbildausschnitts eines Farbkanalbilds mit einem Raster aus Pixelfeldern (3), Erstellen von Histogrammen (5) für die Pixelfelder (3), Klassifizieren der Histogramme (5) der Pixelfelder als Pixel einer Fahrbahnmarkierung (2, 4) oder einer Fahrbahn (1).

## Beschreibung

### Technisches Gebiet

Die Erfindung betrifft ein, insbesondere auf Sensorik und Mustererkennung basiertes, Verfahren zur Echtzeit-Detektion von Fahrbahnmarkierungen gemäß Anspruch 1 und ein Fahrerassistenzsystem für ein Kraftfahrzeug gemäß Anspruch 13. Die Erfindung betrifft ein weiters ein Kraftfahrzeug gemäß Anspruch 15.

### Technischer Hintergrund

Im Stand der Technik sind Verfahren zur Echtzeit-Detektion von Fahrbahnmarkierungen (beispielsweise Leitlinien, Fahrbahnbegrenzungslinien, Fahrstreifenbegrenzungslinien, Zebrastreifen, Abbiegepfeile oder allgemeine Bodenmarkierungen, welche bevorzugt in weißer oder gelber Farbe auf einer Fahrbahnoberfläche aufgebracht sind) bekannt. In den bekannten Verfahren werden Bilder einer Fahrbahn, üblicherweise mittels einer Kamera, aufgenommen und mit Bilderkennungsverfahren (z.B. Mustererkennungsverfahren) analysiert. Die bekannten Bilderkennungsverfahren können jedoch, vor allem bei (für die Detektion) ungünstigen Fahrbahnverhältnissen wie z.B. Nässe, insbesondere bei einer Kombination von Nässe und Dunkelheit, Fahrbahnmarkierungen nicht eindeutig von der Fahrbahn unterscheiden. Dadurch können Funktionsstörungen bei Fahrassistenzsysteme, welche auf eine zuverlässige Detektion von Fahrbahnmarkierungen angewiesen sind, auftreten. Vor allem benötigen beispielsweise Spurhalteassistenzsysteme eine besonders genaue Detektion von Fahrbahnmarkierungen, unabhängig von den vorherrschenden Umweltbedingungen.

Die Aufgabe der vorliegenden Erfindung besteht darin, die Nachteile des Standes der Technik zu lindern bzw. zu beseitigen. Die Erfindung setzt sich daher insbesondere zum Ziel, ein verbessertes Verfahren zur Echtzeit-Detektion von Fahrbahnmarkierungen zu schaffen, welches insbesondere bei Nässe, Dunkelheit und Nebel Fahrbahnmarkierungen zuverlässig erkennt.

Diese Aufgabe wird durch ein Verfahren mit den Merkmalen von Anspruch 1, ein Fahrerassistenzsystem mit den Merkmalen von Anspruch 13. Bevorzugte Ausführungen sind in den abhängigen Ansprüchen angegeben.

### Kurzdarstellung der Erfindung

Erfindungsgemäß weist das, bevorzugt auf Sensorik und Mustererkennung basierende, Verfahren zur Echtzeit-Detektion von Fahrbahnmarkierungen, insbesondere Fahrbahnbegrenzungslinien, Leitlinien und/oder Fahrstreifenbegrenzungslinien, auf einer Fahrbahnoberfläche die folgenden chronologischen auf:
a) Aufnehmen eines Farbbildes einer Fahrzeugumgebung eines Kraftfahrzeuges, insbesondere vor oder hinter einem Kraftfahrzeug, durch eine in einem Kraftfahrzeug eingebaute Kamera, wobei das Farbbild eine Fahrbahn und eine Fahrbahnumgebung abbildet;
b) Transformieren des aufgenommenen Farbbildes in ein Farbmodell mit zumindest drei Farbkanälen, beispielsweise in ein YCbCr-Farbmodell oder ein RGB-Farbmodell, sodass jedem Farbkanal des Farbmodells ein entsprechendes Farbkanalbild des aufgenommenen Farbbilds zugeordnet ist;
c) Segmentieren von zumindest einem Farbkanalbild, vorzugsweise von allen Farbkanalbildern, des Farbmodells in einen Fahrbahnbildausschnitt, in welchem lediglich die Fahrbahn abgebildet ist, und einen Umgebungsbildausschnitt, in welchem lediglich die Fahrbahnumgebung abgebildet ist, wobei vorzugsweise die Segmentierung durch ein Bilderkennungsverfahren und/oder basierend auf Sensordaten eines Sensors, beispielsweise eines Radarsensors, Lidarsensors oder IR-Sensors, erfolgt;
d) Überlagern des Fahrbahnbildausschnitts von zumindest einem Farbkanalbild, vorzugsweise von allen Farbkanalbildern, mit einem Raster, welches aus einer Vielzahl von in Zeilen und Spalten nebeneinander angeordneten Pixelfeldern gebildet ist, wobei jedes Pixelfeld aus NxM, bevorzugt NxN, Pixel aufgebaut ist, wobei die Gesamtheit aller Pixelfelder das Raster bilden, welches den Fahrbahnbildausschnitt im Wesentlichen vollständig überlagert, wobei für jedes Pixel in jedem Pixelfeld ein Farbwert des jeweiligen Farbkanals ermittelt wird, wobei der ermittelte Farbwert ein Wert innerhalb des spezifischen Farbspektrums des jeweiligen Farbkanals ist;
e) Erstellen von Histogrammen für die Pixelfelder von zumindest einem Farbkanal, vorzugweise von allen Farbkanälen, des Farbmodells, wobei in einem Histogramm die Pixel der Pixelfelder nach ihrem ermittelten Farbwert gruppiert werden, sodass das Histogramm eine Häufigkeitsverteilung darstellt, in welcher eine Anzahl an Pixel mit einem bestimmten Farbwert des Farbspektrums des jeweiligen Farbkanals gegen das gesamte Farbspektrum des jeweiligen Farbkanals abgebildet ist;
f) Klassifizieren der Histogramme der einzelnen Pixelfelder für zumindest einen Farbkanal, vorzugsweise für alle Farbkanäle, derart, dass, wenn in einem Histogramm die Pixelanzahl eines bestimmten Farbwerts innerhalb eines von mehreren definierten Farbwertintervallen, welche jeweils einen unterschiedlichen Teilbereich des Farbspektrums des Farbkanals definieren, liegt, die Pixelanzahl des bestimmten Farbwerts dem Farbwertintervall in dem es liegt zugeordnet wird, wobei die mehreren definierten Farbwertintervalle charakteristische Farbwerte für eine Fahrbahnmarkierung oder eine Fahrbahn in dem entsprechenden Farbmodell umfassen, sodass die Pixelanzahl, welche dem bestimmten Farbwertintervall zugeordnet ist, als Pixel einer Fahrbahnmarkierung oder einer Fahrbahn klassifiziert werden.

Dadurch ergibt sich der Vorteil, dass die erhaltene Information mehrerer Farbkanäle kombiniert werden kann, um ein genaueres Ergebnis bei der Detektion von Fahrbahnmarkierungen zu erhalten. Insbesondere liefert die Klassifizierung der Histogramme jedes Farbkanalbilds jedes Farbkanals Informationen zum Vorhandensein von Fahrbahnmarkierungen, und diese (farbkanalspezifischen) Informationen können kombiniert werden, um die Genauigkeit bei der Erkennung von Fahrbahnmarkierungen zu erhöhen. Beispielsweise wenn bei einem Farbkanal (bzw. in einem Farbkanalbild) keine Fahrbahnmarkierung erkannt wird, weil z.B. die Fahrbahnverhältnisse dies nicht zulassen, kann trotzdem in einem der beiden anderen Farbkanäle eine Fahrbahnmarkierung erkannt werden. Die Detektion von Fahrbahnmarkierungen, besonders bei einer nassen Fahrbahn und/oder bei Dunkelheit, kann somit verbessert werden. Die Kamera ist bevorzugt eine Digitalkamera, welche beispielsweise in einem Kraftfahrzeug eingebaut ist oder Teil eines Sensorsystems eines Kraftfahrzeugs ist. Als Mustererkennung können im Zusammenhang mit dieser Offenbarung strukturelle Mustererkennungsverfahren, welche einem Fachmann grundsätzlich bekannt sind, verstanden werden, wobei ein derartiges Mustererkennungsverfahren verschiedene syntaktische und/oder statistische Verfahren kombinieren kann. Bekannterweise können derartige Mustererkennungsverfahren Schritte wie z.B. Erfassung von Daten, Vorverarbeitung der erfassten Daten, Merkmalsgewinnung, ggfs. Merkmalsreduktion und anschließend eine Klassifizierung umfassen.

Es kann vorgesehen sein, dass das Verfahren den weiteren optionalen Schritt aufweist: Bereitstellen eines Fahrassistenzsystems, insbesondere eines Spurhalteassistenten, und Übermittlung der detektierten Fahrbahnmarkierung an das Fahrassistenzsystem, wobei das Fahrassistenzsystem dazu eingerichtet ist, basierend auf den übermittelten detektierten Fahrbahnmarkierung Steuerungs-, Beleuchtungs- oder Signalisierungsvorrichtungen eines Kraftfahrzeugs anzusteuern, wobei vorzugsweise weiters die Position der detektierten Fahrbahnmarkierungen auf einem Bildschirm eines Bordcomputers eines Kraftfahrzeugs visuell dargestellt werden.

Es kann vorgesehen sein, dass das Verfahren den weiteren optionalen Schritt aufweist: Bestimmen der Position des Kraftfahrzeugs, beispielsweise mittels GPS, und Übermittlung der Position des Kraftfahrzeugs, der detektierten Fahrbahnmarkierung und der mit der Kamera erfassten Fahrbahn an ein Fahrassistenzsystem eines Kraftfahrzeugs, insbesondere ein Spurhalteassistent, und vorzugsweise Wiedergabe einer visuellen Darstellung des Kraftfahrzeugs, der detektierten Fahrbahnmarkierung und der mit der Kamera erfassten Fahrbahn, insbesondere in Echtzeit, auf einem Bildschirm eines Bordcomputers eines Kraftfahrzeugs.

Es kann vorgesehen sein, dass das Farbbild aus einer größeren Anzahl von Pixeln aufgebaut ist als ein Pixelfeld des Rasters, wobei vorzugsweise das Farbbild aus N'xM' Pixel aufgebaut ist, wobei N' zumindest mehr als 5 mal, vorzugsweise mehr als 10 mal, insbesondere mehr als 100 mal, größer als N ist, und/oder wobei M' zumindest mehr als 5 mal, vorzugsweise mehr als 10 mal, insbesondere mehr als 100 mal, größer als Mist.

Es kann vorgesehen sein, dass der Pixelvergleich gemäß Schritt f) mit einer Kreuzkorrelationsfunktion durchgeführt wird.

Es kann vorgesehen sein, dass bei der Segmentierung nach Schritt c) Verkehrsobjekte, welche vorzugsweise mit Bilderkennungsverfahren ermittelt und/oder mit einem Sensor, beispielsweise ein Radarsensor, Lidarsensor oder IR-Sensor, erfasst wurden, beispielsweise mittels Bilderkennungs-Algorithmen, aus dem Farbkanalbild herausgefiltert werden.

Es kann vorgesehen sein, dass die einzelnen Pixelfelder in einem gleichmäßigen Raster angeordnet sind, wobei vorzugsweise benachbarte Pixelfelder unmittelbar aneinander angrenzend bzw. abstandsfrei zueinander angeordnet sind.

Es kann vorgesehen sein, dass das Verfahren die weiteren optionalen Schritte umfasst:
g1) Bereitstellen eines, bevorzugt adaptiven, Kraftfahrzeugscheinwerfers mit einer Steuervorrichtung zur Steuerung der mit dem Kraftfahrzeugscheinwerfer erzeugbaren Lichtfunktionen;
g2) Analysieren, beispielsweise mit einem Machine-Learning-Algorithmus, eines Farbkanalbildes, in dem eine Fahrbahnmarkierung gemäß den Schritten c) bis f) detektiert wurde, wobei bei der Analyse in dem Farbkanalbild ein definierter Bildausschnitt bestimmt wird, welcher frei von einer detektierten Fahrbahnmarkierung ist, wobei in dem definierten Bildausschnitt gemäß der Analyse eine Fahrbahnmarkierung vorhanden sein sollte,
g3) Übermittlung des definierten Bildausschnitts an die Steuervorrichtung des Kraftfahrzeugscheinwerfers, wobei die Steuervorrichtung dazu eingerichtet ist, in Antwort auf den übermittelten definierten Bildausschnitt den Kraftfahrzeugscheinwerfer derart anzusteuern, dass eine Umgebung des Kraftfahrzeugscheinwerfers, welche dem übermittelten definierten Bildausschnitt entspricht, mit Licht des
Kraftfahrzeugscheinwerfers beleuchtet wird bzw. gegenüber einer anderen Umgebung stärker beleuchtet wird, wobei vorzugsweise das die Umgebung beleuchtende Licht von einem Lichtmodul des Kraftfahrzeugscheinwerfers, bevorzugt von einer adaptiven Lichtquelle des Kraftfahrzeugscheinwerfers, emittiert wird,
g4) Aufnehmen eines weiteren Farbbildes einer Fahrzeugumgebung, wobei die aufgenommene Fahrzeugumgebung die im Schritt g3) beleuchtete Umgebung aufweist;
g5) Durchführen der Schritte b) bis f) mit dem im Schritt g4) aufgenommenen Farbbild.

Es kann vorgesehen sein, dass der Kraftfahrzeugscheinwerfer eine Pixel-Lichtquelle oder eine hochauflösende Lichtquelle aufweist, wobei zur Erhöhung der Beleuchtung, insbesondere des Kontrasts, des im Schritt g4) aufgenommen Farbbildes
- die Beleuchtung der Umgebung, welche dem übermittelten Bildausschnitt entspricht, durch eine entsprechende Ansteuerung der Pixel-Lichtquelle erhöht wird, oder
- die Beleuchtungsintensität der Pixel-Lichtquelle mit dem Verschluss der Kamera synchronisiert wird, oder
- eine Belichtungszeit der Kamera bei Schritt g4) gegenüber einem im Schritt a) eingestellten Belichtungszeit-Grundwert erhöht wird.

Es kann vorgesehen sein, dass das Verfahren den weiteren optionalen Schritt umfasst:
- Analysieren, beispielsweise mit einem Machine-Learning-Algorithmus, eines Farbkanalbildes, in dem eine Fahrbahnmarkierung gemäß den Schritten c) bis f) detektiert wurde, wobei bei der Analyse in dem Farbkanalbild ein definierter Bildausschnitt bestimmt wird, welcher frei von einer detektierten Fahrbahnmarkierung ist, wobei in dem definierten Bildausschnitt gemäß der Analyse eine Fahrbahnmarkierung vorhanden sein sollte,
wobei das Klassifizieren gemäß Schritt f) für den definierten Bildausschnitt mit einem angepassten, insbesondere einem größeren oder kleineren, definierten Farbwertintervall durchgeführt wird, sodass eine Pixelanzahl eines bestimmten Farbwerts in einem Histogramm, welche außerhalb des ursprünglichen Farbintervalls liegen würde, innerhalb des angepassten Farbintervalls liegt.

Es kann vorgesehen sein, dass das Verfahren den weiteren optionalen Schritt umfasst:
- Bereitstellen eines Sensors, beispielsweise eines Radarsensors, Lidarsensors oder IR-Sensors, zur Erfassung von Fahrbahnmarkierungen;
- Analysieren, beispielsweise mit einem Machine-Learning-Algorithmus, eines Farbkanalbildes, in dem eine Fahrbahnmarkierung gemäß den Schritten c) bis f) detektiert wurde, wobei bei der Analyse in dem Farbkanalbild ein definierter Bildausschnitt bestimmt wird, welcher frei von einer detektierten Fahrbahnmarkierung ist, wobei in dem definierten Bildausschnitt gemäß der Analyse eine Fahrbahnmarkierung vorhanden sein sollte;
- Erfassen des definierten Bildausschnitts mit dem Sensor, um eine in Schritt f) nicht erfasste Fahrbahnmarkierung mit dem Sensor zu bestimmen.

Es kann vorgesehen sein, dass der Pixelvergleich in den Pixelfeldern nacheinander, reihenweise oder spaltenweise, durchgeführt wird, bis alle Pixelfelder des gesamten Rasters verglichen sind, wobei vorzugsweise der Pixelvergleich innerhalb der Pixelfelder für das gesamte Raster gleichzeitig erfolgt, wobei der Vergleich von Pixeln eines Pixelfeldes jeweils auf unterschiedlichen CPU Kernen oder Threads erfolgt.

Gemäß einem weiteren Aspekt der Erfindung ist ein Fahrerassistenzsystem für ein Kraftfahrzeug vorgesehen, wobei das Fahrerassistenzsystem zur Echtzeit-Detektion von Fahrbahnmarkierungen, insbesondere Fahrbahnbegrenzungslinien, Leitlinien und/oder Fahrstreifenbegrenzungslinien, auf einer Fahrbahnoberfläche eingerichtet ist, wobei das Fahrerassistenzsystem dazu eingerichtet ist,
ein mit einer Kamera eines Kraftfahrzeugs aufgenommenes Farbbild einer Fahrzeugumgebung eines Kraftfahrzeuges, insbesondere vor oder hinter einem Kraftfahrzeug, zu empfangen;
das aufgenommene Farbbild in ein Farbmodell mit zumindest drei Farbkanälen, beispielsweise in ein YCbCr-Farbmodell oder ein RGB-Farbmodell, zu transformieren, sodass jedem Farbkanal des Farbmodells ein entsprechendes Farbkanalbild des aufgenommenen Farbbilds zugeordnet ist;
das zumindest eine Farbkanalbild, vorzugsweise alle Farbkanalbilder, des Farbmodells in einen Fahrbahnbildausschnitt, in welchem lediglich die Fahrbahn abgebildet ist, und einen Umgebungsbildausschnitt, in welchem lediglich die Fahrbahnumgebung abgebildet ist, zu segmentieren, wobei vorzugsweise die Segmentierung durch ein Bilderkennungsverfahren und/oder basierend auf Sensordaten eines Sensors, beispielsweise eines Radarsensors, Lidarsensors oder IR-Sensors, erfolgt;
den Fahrbahnbildausschnitt von zumindest einem Farbkanalbild, vorzugsweise von allen Farbkanalbildern, mit einem Raster zu überlagern, welches aus einer Vielzahl von in Zeilen und Spalten nebeneinander angeordneten Pixelfeldern gebildet ist, wobei jedes Pixelfeld aus NxM, bevorzugt NxN, Pixel aufgebaut ist, wobei die Gesamtheit aller Pixelfelder das Raster bilden, welches den Fahrbahnbildausschnitt im Wesentlichen vollständig überlagert, wobei für jedes Pixel in jedem Pixelfeld ein Farbwert des jeweiligen Farbkanals ermittelt wird, wobei der ermittelte Farbwert ein Wert innerhalb des spezifischen Farbspektrums des jeweiligen Farbkanals ist;
Histogramme für Pixelfelder von zumindest einem Farbkanal, vorzugweise von allen Farbkanäle, des Farbmodells zu erstellen, wobei in einem Histogramm die Pixel der Pixelfelder nach ihrem ermittelten Farbwert gruppiert werden, sodass ein Histogramm eine Häufigkeitsverteilung darstellt, in welcher eine Anzahl an Pixel mit einem bestimmten Farbwert des Farbspektrums des jeweiligen Farbkanals gegen das gesamte Farbspektrum des jeweiligen Farbkanals abgebildet ist;
die Histogramme der einzelnen Pixelfelder für zumindest einen Farbkanal, vorzugsweise für alle Farbkanäle, derart zu klassifizieren, dass, wenn in einem Histogramm die Pixelanzahl eines bestimmten Farbwerts innerhalb eines von mehreren definierten Farbwertintervallen, welche jeweils einen unterschiedlichen Teilbereich des Farbspektrums des Farbkanals definieren, liegt, die Pixelanzahl des bestimmten Farbwerts dem Farbwertintervall in dem es liegt zugeordnet wird, wobei die mehreren definierten Farbwertintervalle charakteristische Farbwerte für eine Fahrbahnmarkierung oder eine Fahrbahn in dem entsprechenden Farbmodell umfassen, sodass die Pixelanzahl, welche dem bestimmten Farbwertintervall zugeordnet ist, als Pixel einer Fahrbahnmarkierung oder einer Fahrbahn klassifiziert werden.

Es kann vorgesehen sein, dass die charakteristischen Farbwerte für eine Fahrbahnmarkierung oder eine Fahrbahn in einem Speicher des Fahrerassistenzsystem hinterlegt sind.

Weiters kann ein Kraftfahrzeug, umfassend ein Fahrerassistenzsystem vorgesehen sein.

### Kurzbeschreibung der Figuren

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 ein Blockdiagramm der Verfahrensschritte eines erfindungsgemäßen Verfahrens;
Fig. 2 eine schematische Ansicht einer Fahrbahn;
Fig. 3 ein Histogramm für ein Pixelfeld eines Farbkanals;
Fig. 4 ein Histogramm für ein weiteres Pixelfeld des Farbkanals.

### Eingehende Beschreibung der Ausführungsformen

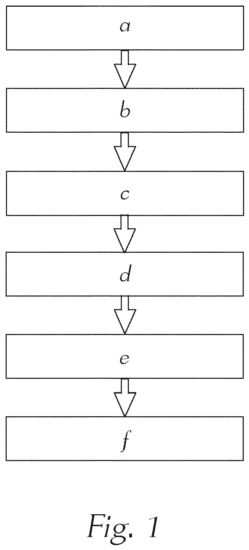

**Fig. 1** zeigt ein Blockdiagramm der Verfahrensschritte eines Verfahrens zur Echtzeit-Detektion von Fahrbahnmarkierungen 2, insbesondere Fahrbahnbegrenzungslinien, Leitlinien und/oder Fahrstreifenbegrenzungslinien, auf einer Fahrbahnoberfläche.

Das Verfahren zur Echtzeit-Detektion umfasst die folgenden chronologischen Schritte:
a) Aufnehmen eines Farbbildes einer Fahrzeugumgebung eines Kraftfahrzeuges, insbesondere vor oder hinter einem Kraftfahrzeug, durch eine in einem Kraftfahrzeug eingebaute Kamera, wobei das Farbbild eine Fahrbahn 1 und eine Fahrbahnumgebung 2 abbildet.
b) Transformieren des aufgenommenen Farbbildes in ein Farbmodell mit zumindest drei Farbkanälen, beispielsweise in ein YCbCr-Farbmodell oder ein RGB-Farbmodell, sodass jedem Farbkanal des Farbmodells ein entsprechendes Farbkanalbild des aufgenommenen Farbbilds zugeordnet ist.
c) Segmentieren von zumindest einem Farbkanalbild, vorzugsweise von allen Farbkanalbildern, des Farbmodells in einen Fahrbahnbildausschnitt, in welchem lediglich die Fahrbahn 1 abgebildet ist, und einen Umgebungsbildausschnitt, in welchem lediglich die Fahrbahnumgebung 2 abgebildet ist, wobei vorzugsweise die Segmentierung durch ein Bilderkennungsverfahren und/oder basierend auf Sensordaten eines Sensors, beispielsweise eines Radarsensors, Lidarsensors oder IR-Sensors, erfolgt.
d) Überlagern des Fahrbahnbildausschnitts von zumindest einem Farbkanalbild, vorzugsweise von allen Farbkanalbildern, mit einem Raster, welches aus einer Vielzahl von in Zeilen und Spalten nebeneinander angeordneten Pixelfeldern gebildet ist, wobei jedes Pixelfeld aus NxM, bevorzugt NxN, Pixel aufgebaut ist, wobei die Gesamtheit aller Pixelfelder das Raster bilden, welches den Fahrbahnbildausschnitt im Wesentlichen vollständig überlagert, wobei für jedes Pixel in jedem Pixelfeld ein Farbwert des jeweiligen Farbkanals ermittelt wird, wobei der ermittelte Farbwert ein Wert innerhalb des spezifischen Farbspektrums des jeweiligen Farbkanals ist.
e) Erstellen von Histogrammen 5 für die Pixelfelder von zumindest einem Farbkanal, vorzugweise von allen Farbkanälen, des Farbmodells, wobei in einem Histogramm 5 die Pixel der Pixelfelder nach ihrem ermittelten Farbwert gruppiert werden, sodass das Histogramm 5 eine Häufigkeitsverteilung darstellt, in welcher eine Anzahl an Pixel mit einem bestimmten Farbwert des Farbspektrums des jeweiligen Farbkanals gegen das gesamte Farbspektrum des jeweiligen Farbkanals abgebildet ist.
f) Klassifizieren der Histogramme 5 der einzelnen Pixelfelder für zumindest einen Farbkanal, vorzugsweise für alle Farbkanäle, derart, dass, wenn in einem Histogramm 5 die Pixelanzahl eines bestimmten Farbwerts innerhalb eines von mehreren definierten Farbwertintervallen, welche jeweils einen unterschiedlichen Teilbereich des Farbspektrums des Farbkanals definieren, liegt, die Pixelanzahl des bestimmten Farbwerts dem Farbwertintervall in dem es liegt zugeordnet wird, wobei die mehreren definierten Farbwertintervalle charakteristische Farbwerte für eine Fahrbahnmarkierung 2 oder eine Fahrbahn in dem entsprechenden Farbmodell umfassen, sodass die Pixelanzahl, welche dem bestimmten Farbwertintervall zugeordnet ist, als Pixel einer Fahrbahnmarkierung 2 oder einer Fahrbahn 1 klassifiziert werden.

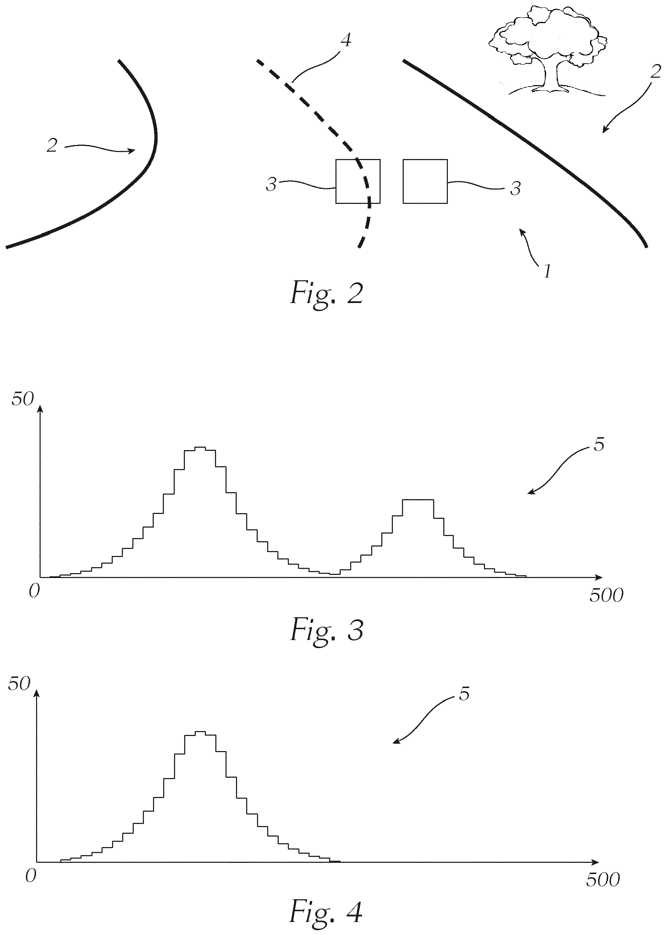

**Fig. 2** zeigt ein schematisches Bild einer Fahrzeugumgebung mit einer Fahrbahn 1, welche Fahrbahnmarkierungen 2, 4 aufweist (in diesem Beispiel eine linke und rechte Fahrbahnbegrenzungslinie 2 und einen Mittelstreifen 4). Das Bild ist eine beispielhafte schematische Darstellung eines Bildes, welches im Verfahrensschritt a) aufgenommen wird.

Im Fahrbahnbildausschnitt des Bildes sind zwei (in dem gezeigten Beispiel quadratische) Pixelfelder 3 eines Pixelfeldrasters erkennbar, welche den Fahrbahnbildausschnitt überlagern. Jedes Pixelfeld 3 ist aus einer Vielzahl von in Zeilen und Spalten nebeneinander angeordneten Pixeln (nicht gezeigt) gebildet, wobei ein Pixelfeld 3 aus NxM, bevorzugt NxN Pixeln, aufgebaut sein kann. Das Bild hat eine Auflösung von N'xM', wobei N'>N und M'>M ist.

Das linke Pixelfeld 3 kann zu einem Zeitpunkt t0 den Fahrbahnbildausschnitt überlagern und zu einem späteren Zeitpunkt t1 weiter nach rechts wandern (bis der gesamte Fahrbahnbildausschnitt abgerastert wurde). Alternativ zur Abrasterung mit einem Pixelfeld können auch das linke Pixelfeld 3 und das rechte Pixelfeld 3 (sowie viele weitere Pixelfelder) gleichzeitig den Fahrbahnbildausschnitt überlagern. Wenn mehrere Pixelfelder 3 gleichzeitig den Fahrbahnbildausschnitt überlagern, kann jedem Pixelfeld 3 ein CPU-Kern oder ein Thread zugeordnet sein, um eine gleichzeitige Auswertung der Pixelfelder zu ermöglichen.

**Fig. 3** zeigt ein Histogramm 5 des linken Pixelfelds 3 aus Fig. 2 für einen Farbkanal.

**Fig. 4** zeigt ein Histogramm 5 des rechten Pixelfelds 3 aus Fig. 2 für denselben Farbkanal.

In den beiden Histogrammen 5 ist jeweils auf der X-Achse ein Farbwert, zwischen 0 und 500, für einen Farbkanal eines Farbmodells, beispielsweise der Y-Wert des YCbCr-Farbmodells, gezeigt. Auf der Y-Achse der beiden Histogramme 5 ist die Pixelanzahl angegeben (der Y-Achsenwert in den Histogrammen 5 entspricht somit der Anzahl an Pixel, welche den entsprechenden Farbwert des Farbkanals (auf der X-Achse) aufweisen).

Das linke Pixelfeld 3 in Fig. 2 überlagert einen Fahrbahnabschnitt und eine Fahrbahnmarkierung, in diesem Fall drei Teilstreifen des Mittelstreifens 4 der Fahrbahn 1. Jene Pixel des Pixelfelds 3, welche den Fahrbahnabschnitt (also z.B. den dunklen Asphalt) überlagern, weisen einen niedrigeren Farbwert (im Farbmodell) gemäß Verfahrensschritt e) auf als jene Pixel des Pixelfelds 3, welche die Teilstreifen des Mittelstreifens 4 (welcher z.B. aus weißer Farbe gebildet ist) überlagern.

Die Pixel des linken Pixelfelds 3 in Fig. 2, welche den Fahrbahnabschnitt überlagern, korrespondieren zu dem linken Peak im Histogramm 5 der Fig. 3. Die Pixel des linken Pixelfelds 3 in Fig. 2, welche den Mittelstreifen 4 überlagern, korrespondieren zu dem rechten Peak im Histogramm 5 der Fig. 3 (da die Pixel, welche den weißen Mittelstreifen 4 überlagern, einen höhen Y-Wert im YCbCr-Farbmodell aufweisen als jene Pixel, welche den dunklen Asphalt überlagern). Gemäß Verfahrensschritt f) können somit die Pixel des linken Peaks als Fahrbahn 1 und die Pixel des rechten Peaks als Fahrbahnmarkierung klassifiziert werden.

Das rechte Pixelfeld 3 in Fig. 2 überlagert nur eine Fahrbahn 1, jedoch keine Fahrbahnmarkierung bzw. keinen Mittelstreifen 4. Somit weisen alle Pixel in dem rechten Pixelfeld 3 einen ähnlichen Farbwert gemäß Verfahrensschritt e) auf. Im zum rechten Pixelfeld 3 korrespondierenden Histogramm 5 in Fig. 4 ist somit nur ein Peak erkennbar, wobei gemäß Verfahrensschritt f) die Pixel des linken Peaks dunkel (bzw. einen niedrigen Farbwert im Farbmodell aufweisen) und somit als Fahrbahn 1 klassifiziert werden.

### LISTE DER BEZUGSZEICHEN

- 1: Fahrbahn
- 2: Fahrbahnbegrenzungslinie
- 3: Pixelfeld
- 4: Mittelstreifen
- 5: Histogramm

## Patentansprüche

1. Verfahren zur Echtzeit-Detektion von Fahrbahnmarkierungen (2, 4), insbesondere Fahrbahnbegrenzungslinien, Leitlinien und/oder Fahrstreifenbegrenzungslinien, auf einer Fahrbahnoberfläche, wobei das Verfahren zur Echtzeit-Detektion durch die folgenden chronologischen Schritte gekennzeichnet ist:
a) Aufnehmen eines Farbbildes einer Fahrzeugumgebung eines Kraftfahrzeuges, insbesondere vor oder hinter einem Kraftfahrzeug, durch eine in einem Kraftfahrzeug eingebaute Kamera, wobei das Farbbild eine Fahrbahn (1) und eine Fahrbahnumgebung abbildet;
b) Transformieren des aufgenommenen Farbbildes in ein Farbmodell mit zumindest drei Farbkanälen, beispielsweise in ein YCbCr-Farbmodell oder ein RGB-Farbmodell, sodass jedem Farbkanal des Farbmodells ein entsprechendes Farbkanalbild des aufgenommenen Farbbilds zugeordnet ist;
c) Segmentieren von zumindest einem Farbkanalbild, vorzugsweise von allen Farbkanalbildern, des Farbmodells in einen Fahrbahnbildausschnitt, in welchem lediglich die Fahrbahn (1) abgebildet ist, und einen Umgebungsbildausschnitt, in welchem lediglich die Fahrbahnumgebung abgebildet ist, wobei vorzugsweise die Segmentierung durch ein Bilderkennungsverfahren und/oder basierend auf Sensordaten eines Sensors, beispielsweise eines Radarsensors, Lidarsensors oder IR-Sensors, erfolgt;
d) Überlagern des Fahrbahnbildausschnitts von zumindest einem Farbkanalbild, vorzugsweise von allen Farbkanalbildern, mit einem Raster, welches aus einer Vielzahl von in Zeilen und Spalten nebeneinander angeordneten Pixelfeldern gebildet ist, wobei jedes Pixelfeld aus NxM, bevorzugt NxN, Pixel aufgebaut ist, wobei die Gesamtheit aller Pixelfelder das Raster bilden, welches den Fahrbahnbildausschnitt im Wesentlichen vollständig überlagert, wobei für jedes Pixel in jedem Pixelfeld ein Farbwert des jeweiligen Farbkanals ermittelt wird, wobei der ermittelte Farbwert ein Wert innerhalb des spezifischen Farbspektrums des jeweiligen Farbkanals ist;
e) Erstellen von Histogrammen (5) für die Pixelfelder von zumindest einem Farbkanal, vorzugweise von allen Farbkanälen, des Farbmodells, wobei in einem Histogramm (5) die Pixel der Pixelfelder nach ihrem ermittelten Farbwert gruppiert werden, sodass das Histogramm (5) eine Häufigkeitsverteilung darstellt, in welcher eine Anzahl an Pixel mit einem bestimmten Farbwert des Farbspektrums des jeweiligen Farbkanals gegen das gesamte Farbspektrum des jeweiligen Farbkanals abgebildet ist;
f) Klassifizieren der Histogramme (5) der einzelnen Pixelfelder für zumindest einen Farbkanal, vorzugsweise für alle Farbkanäle, derart, dass, wenn in einem Histogramm (5) die Pixelanzahl eines bestimmten Farbwerts innerhalb eines von mehreren definierten Farbwertintervallen, welche jeweils einen unterschiedlichen Teilbereich des Farbspektrums des Farbkanals definieren, liegt, die Pixelanzahl des bestimmten Farbwerts dem Farbwertintervall in dem es liegt zugeordnet wird, wobei die mehreren definierten Farbwertintervalle charakteristische Farbwerte für eine Fahrbahnmarkierung (2, 4) oder eine Fahrbahn (1) in dem entsprechenden Farbmodell umfassen, sodass die Pixelanzahl, welche dem bestimmten Farbwertintervall zugeordnet ist, als Pixel einer Fahrbahnmarkierung (2, 4) oder einer Fahrbahn (1) klassifiziert werden.

2. Verfahren nach Anspruch 1, wobei das Verfahren den weiteren Schritt aufweist: Bereitstellen eines Fahrassistenzsystems, insbesondere eines Spurhalteassistenten, und Übermittlung der detektierten Fahrbahnmarkierung (2, 4) an das Fahrassistenzsystem, wobei das Fahrassistenzsystem dazu eingerichtet ist, basierend auf den übermittelten detektierten Fahrbahnmarkierung (2, 4) Steuerungs-, Beleuchtungs- oder Signalisierungsvorrichtungen eines Kraftfahrzeugs anzusteuern, wobei vorzugsweise weiters die Position der detektierten Fahrbahnmarkierung (2, 4) auf einem Bildschirm eines Bordcomputers eines Kraftfahrzeugs visuell dargestellt werden.

3. Verfahren nach einem der vorhergehenden Ansprüche, wobei das Verfahren den weiteren Schritt umfasst: Bestimmen der Position des Kraftfahrzeugs, beispielsweise mittels GPS, und Übermittlung der Position des Kraftfahrzeugs, der detektierten Fahrbahnmarkierung (2, 4) und der mit der Kamera erfassten Fahrbahn (1) an ein Fahrassistenzsystem eines Kraftfahrzeugs, insbesondere ein Spurhalteassistent, und vorzugsweise Wiedergabe einer visuellen Darstellung des Kraftfahrzeugs, der detektierten Fahrbahnmarkierung (2, 4) und der mit der Kamera erfassten Fahrbahn (1), insbesondere in Echtzeit, auf einem Bildschirm eines Bordcomputers eines Kraftfahrzeugs.

4. Verfahren nach einem der vorhergehenden Ansprüche, wobei das Farbbild aus einer größeren Anzahl von Pixeln aufgebaut ist als ein Pixelfeld des Rasters, wobei vorzugsweise das Farbbild aus N'xM' Pixel aufgebaut ist, wobei N' zumindest mehr als 5 mal, vorzugsweise mehr als 10 mal, insbesondere mehr als 100 mal, größer als N ist, und/oder wobei M' zumindest mehr als 5 mal, vorzugsweise mehr als 10 mal, insbesondere mehr als 100 mal, größer als Mist.

5. Verfahren nach einem der vorhergehenden Ansprüche, wobei der Pixelvergleich gemäß Schritt f) mit einer Kreuzkorrelationsfunktion durchgeführt wird, wobei vorzugsweise bei der Segmentierung nach Schritt c) Verkehrsobjekte, welche vorzugsweise mit Bilderkennungsverfahren ermittelt und/oder mit einem Sensor, beispielsweise ein Radarsensor, Lidarsensor oder IR-Sensor, erfasst wurden, beispielsweise mittels Bilderkennungs-Algorithmen, aus dem Farbkanalbild herausgefiltert werden.

6. Verfahren nach einem der vorhergehenden Ansprüche, wobei die einzelnen Pixelfelder in einem gleichmäßigen Raster angeordnet sind, wobei vorzugsweise benachbarte Pixelfelder unmittelbar aneinander angrenzend bzw. abstandsfrei zueinander angeordnet sind.

7. Verfahren nach einem der vorhergehenden Ansprüche, wobei das Verfahren die weiteren Schritte umfasst:
g1) Bereitstellen eines, bevorzugt adaptiven, Kraftfahrzeugscheinwerfers mit einer Steuervorrichtung zur Steuerung der mit dem Kraftfahrzeugscheinwerfer erzeugbaren Lichtfunktionen;
g2) Analysieren, beispielsweise mit einem Machine-Learning-Algorithmus, eines Farbkanalbildes, in dem eine Fahrbahnmarkierung (2, 4) gemäß den Schritten c) bis f) detektiert wurde, wobei bei der Analyse in dem Farbkanalbild ein definierter Bildausschnitt bestimmt wird, welcher frei von einer detektierten Fahrbahnmarkierung (2, 4) ist, wobei in dem definierten Bildausschnitt gemäß der Analyse eine Fahrbahnmarkierung (2, 4) vorhanden sein sollte,
g3) Übermittlung des definierten Bildausschnitts an die Steuervorrichtung des Kraftfahrzeugscheinwerfers, wobei die Steuervorrichtung dazu eingerichtet ist, in Antwort auf den übermittelten definierten Bildausschnitt den Kraftfahrzeugscheinwerfer derart anzusteuern, dass eine Umgebung des Kraftfahrzeugscheinwerfers, welche dem übermittelten definierten Bildausschnitt entspricht, mit Licht des Kraftfahrzeugscheinwerfers beleuchtet wird bzw. gegenüber einer anderen Umgebung stärker beleuchtet wird, wobei vorzugsweise das die Umgebung beleuchtende Licht von einem Lichtmodul des Kraftfahrzeugscheinwerfers, bevorzugt von einer adaptiven Lichtquelle des Kraftfahrzeugscheinwerfers, emittiert wird,
g4) Aufnehmen eines weiteren Farbbildes einer Fahrzeugumgebung, wobei die aufgenommene Fahrzeugumgebung die im Schritt g3) beleuchtete Umgebung aufweist;
g5) Durchführen der Schritte b) bis f) mit dem im Schritt g4) aufgenommenen Farbbild.

8. Verfahren nach Anspruch 7, wobei der Kraftfahrzeugscheinwerfer eine Pixel-Lichtquelle oder eine hochauflösende Lichtquelle aufweist, wobei zur Erhöhung der Beleuchtung, insbesondere des Kontrasts, des im Schritt g4) aufgenommen Farbbildes
- die Beleuchtung der Umgebung, welche dem übermittelten Bildausschnitt entspricht, durch eine entsprechende Ansteuerung der Pixel-Lichtquelle erhöht wird, oder
- die Beleuchtungsintensität der Pixel-Lichtquelle mit dem Verschluss der Kamera synchronisiert wird, oder
- eine Belichtungszeit der Kamera bei Schritt g4) gegenüber einem im Schritt a) eingestellten Belichtungszeit-Grundwert erhöht wird.

9. Verfahren nach einem der vorhergehenden Ansprüche, wobei das Verfahren den weiteren Schritt umfasst:
- Analysieren, beispielsweise mit einem Machine-Learning-Algorithmus, eines Farbkanalbildes, in dem eine Fahrbahnmarkierung (2, 4) gemäß den Schritten c) bis f) detektiert wurde, wobei bei der Analyse in dem Farbkanalbild ein definierter Bildausschnitt bestimmt wird, welcher frei von einer detektierten Fahrbahnmarkierung (2, 4) ist, wobei in dem definierten Bildausschnitt gemäß der Analyse eine Fahrbahnmarkierung (2, 4) vorhanden sein sollte,
wobei das Klassifizieren gemäß Schritt f) für den definierten Bildausschnitt mit einem angepassten, insbesondere einem größeren oder kleineren, definierten Farbwertintervall durchgeführt wird, sodass eine Pixelanzahl eines bestimmten Farbwerts in einem Histogramm (5), welche außerhalb des ursprünglichen Farbintervalls liegen würde, innerhalb des angepassten Farbintervalls liegt.

10. Verfahren nach einem der vorhergehenden Ansprüche, wobei das Verfahren den weiteren Schritt umfasst:
- Bereitstellen eines Sensors, beispielsweise eines Radarsensors, Lidarsensors oder IR-Sensors, zur Erfassung von Fahrbahnmarkierungen (2, 4);
- Analysieren, beispielsweise mit einem Machine-Learning-Algorithmus, eines Farbkanalbildes, in dem eine Fahrbahnmarkierung (2, 4) gemäß den Schritten c) bis f) detektiert wurde, wobei bei der Analyse in dem Farbkanalbild ein definierter Bildausschnitt bestimmt wird, welcher frei von einer detektierten Fahrbahnmarkierung (2, 4) ist, wobei in dem definierten Bildausschnitt gemäß dem Machine-Learning-Algorithmus eine Fahrbahnmarkierung (2, 4) vorhanden sein sollte;
- Erfassen des definierten Bildausschnitts mit dem Sensor, um eine in Schritt f) nicht erfasste Fahrbahnmarkierung (2, 4) mit dem Sensor zu bestimmen.

11. Verfahren nach einem der vorhergehenden Ansprüche, wobei der Pixelvergleich in den Pixelfeldern nacheinander, reihenweise oder spaltenweise, durchgeführt wird, bis alle Pixelfelder des gesamten Rasters verglichen sind.

12. Verfahren nach einem der vorhergehenden Ansprüche, wobei der Pixelvergleich innerhalb der Pixelfelder für das gesamte Raster gleichzeitig erfolgt, wobei der Vergleich von Pixeln eines Pixelfeldes jeweils auf unterschiedlichen CPU Kernen oder Threads erfolgt.

13. Fahrerassistenzsystem für ein Kraftfahrzeug, wobei das Fahrerassistenzsystem zur Echtzeit-Detektion, gemäß dem Verfahren nach einem der Ansprüche 1 bis 12, von Fahrbahnmarkierungen (2, 4), insbesondere Fahrbahnbegrenzungslinien, Leitlinien und/oder Fahrstreifenbegrenzungslinien, auf einer Fahrbahnoberfläche eingerichtet ist, **dadurch gekennzeichnet, dass** das Fahrerassistenzsystem dazu eingerichtet ist,
ein mit einer Kamera eines Kraftfahrzeugs aufgenommenes Farbbild einer Fahrzeugumgebung eines Kraftfahrzeuges, insbesondere vor oder hinter einem Kraftfahrzeug, zu empfangen;
das aufgenommene Farbbild in ein Farbmodell mit zumindest drei Farbkanälen, beispielsweise in ein YCbCr-Farbmodell oder ein RGB-Farbmodell, zu transformieren, sodass jedem Farbkanal des Farbmodells ein entsprechendes Farbkanalbild des aufgenommenen Farbbilds zugeordnet ist;
das zumindest eine Farbkanalbild, vorzugsweise alle Farbkanalbilder, des Farbmodells in einen Fahrbahnbildausschnitt, in welchem lediglich die Fahrbahn abgebildet ist, und einen Umgebungsbildausschnitt, in welchem lediglich die Fahrbahnumgebung abgebildet ist, zu segmentieren, wobei vorzugsweise die Segmentierung durch ein Bilderkennungsverfahren und/oder basierend auf Sensordaten eines Sensors, beispielsweise eines Radarsensors, Lidarsensors oder IR-Sensors, erfolgt;
den Fahrbahnbildausschnitt von zumindest einem Farbkanalbild, vorzugsweise von allen Farbkanalbildern, mit einem Raster zu überlagern, welches aus einer Vielzahl von in Zeilen und Spalten nebeneinander angeordneten Pixelfeldern gebildet ist, wobei jedes Pixelfeld aus NxM, bevorzugt NxN, Pixel aufgebaut ist, wobei die Gesamtheit aller Pixelfelder das Raster bilden, welches den Fahrbahnbildausschnitt im Wesentlichen vollständig überlagert, wobei für jedes Pixel in jedem Pixelfeld ein Farbwert des jeweiligen Farbkanals ermittelt wird, wobei der ermittelte Farbwert ein Wert innerhalb des spezifischen Farbspektrums des jeweiligen Farbkanals ist;
Histogramme (5) für Pixelfelder von zumindest einem Farbkanal, vorzugweise von allen Farbkanäle, des Farbmodells zu erstellen, wobei in einem Histogramm (5) die Pixel der Pixelfelder nach ihrem ermittelten Farbwert gruppiert werden, sodass ein Histogramm (5) eine Häufigkeitsverteilung darstellt, in welcher eine Anzahl an Pixel mit einem bestimmten Farbwert des Farbspektrums des jeweiligen Farbkanals gegen das gesamte Farbspektrum des jeweiligen Farbkanals abgebildet ist;
die Histogramme (5) der einzelnen Pixelfelder für zumindest einen Farbkanal, vorzugsweise für alle Farbkanäle, derart zu klassifizieren, dass, wenn in einem Histogramm (5) die Pixelanzahl eines bestimmten Farbwerts innerhalb eines von mehreren definierten Farbwertintervallen, welche jeweils einen unterschiedlichen Teilbereich des Farbspektrums des Farbkanals definieren, liegt, die Pixelanzahl des bestimmten Farbwerts dem Farbwertintervall in dem es liegt zugeordnet wird, wobei die mehreren definierten Farbwertintervalle charakteristische Farbwerte für eine Fahrbahnmarkierung (2, 4) oder eine Fahrbahn in dem entsprechenden Farbmodell umfassen, sodass die Pixelanzahl, welche dem bestimmten Farbwertintervall zugeordnet ist, als Pixel einer Fahrbahnmarkierung (2, 4) oder einer Fahrbahn klassifiziert werden.

14. Fahrerassistenzsystem nach Anspruch 13, wobei die charakteristischen Farbwerte für eine Fahrbahnmarkierung (2, 4) oder eine Fahrbahn (1) in einem Speicher des Fahrerassistenzsystem hinterlegt sind.

15. Kraftfahrzeug, umfassend ein Fahrerassistenzsystem nach einem der Ansprüche 13 oder 14.
